# EUROPÄISCHE PATENTSCHRIFT

(11) **EP 2 750 920 B1**
(45) Veröffentlichungstag und Bekanntmachung des Hinweises auf die Patenterteilung: **08.05.2019**
(21) Anmeldenummer: 12745659.8
(22) Anmeldetag: 26.07.2012
(51) Int. Cl.: B60L 50/50

(54) **VERFAHREN UND VORRICHTUNG ZUM LADEN EINER BATTERIE EINES ELEKTRISCHEN ANTRIEBS UNTER VERWENDUNG VON KOMPONENTEN DES ELEKTRISCHEN ANTRIEBS**
METHOD AND DEVICE FOR CHARGING A BATTERY OF AN ELECTRICAL DRIVE USING COMPONENTS OF THE ELECTRICAL DRIVE
PROCÉDÉ ET DISPOSITIF POUR CHARGER UNE BATTERIE D'UN MÉCANISME D'ENTRAÎNEMENT ÉLECTRIQUE EN UTILISANT DES COMPOSANTS DU MÉCANISME D'ENTRAÎNEMENT ÉLECTRIQUE

(30) Priorität: 29.08.2011 DE 102011081725
(43) Veröffentlichungstag der Anmeldung: 09.07.2014
(73) Patentinhaber: Robert Bosch GmbH, 70442 Stuttgart (DE)
(72) Erfinder: DITTMER, Bernd, 71640 Ludwigsburg (DE); EBERLEIN, Edwin, 70197 Stuttgart (DE); GE, Jie, 70499 Stuttgart-Hausen (DE); MADER, Bernhard, 71394 Kernen (DE); VAN BOOVEN, Christoph, 74354 Besigheim (DE); MITTAG, Andreas, 71706 Markgroeningen (DE); EITNER, Peter, 75365 Calw (DE); ECKERT, Bernd, 71665 Vaihingen an der Enz (DE)
(86) Internationale Anmeldenummer: PCT/EP2012/064674
(87) Internationale Veröffentlichungsnummer: WO 2013/029891

(56) Entgegenhaltungen:
- WO-A1-2010/103063
- WO-A2-2010/142738
- DE-A1-102005 016 177
- DE-T2- 69 617 026

## Beschreibung

Die Erfindung betrifft ein Verfahren und eine Vorrichtung zum Laden einer Batterie eines elektrischen Antriebs unter Verwendung von Komponenten des elektrischen Antriebs.

### Stand der Technik

Elektrische Antriebe werden häufig durch Batterien bzw. Akkumulatoren mit Energie versorgt. Derartige Batterien stellen typischerweise eine Gleichspannung bereit, die für den Betrieb des elektrischen Antriebs häufig mittels eines Antriebsumsetzers bzw. eines DC/AC-Umsetzers in eine Wechselspannung umgesetzt werden. Der elektrische Antrieb setzt die elektrische Energie dann beispielsweise in eine Drehbewegung o. ä. um.

Für das Aufladen dieser Batterien werden häufig Ladevorrichtungen verwendet, die von dem Antrieb unabhängig sind und mittels eigener elektrischer Komponenten realisiert werden. Bei elektrisch angetriebenen Fahrzeugen werden die Ladevorrichtungen oftmals derart in die Fahrzeuge integriert, dass die Fahrzeuge nur noch mittels elektrischer Steckverbindungen oder ähnlichem an ein elektrisches Stromversorgungsnetz angeschlossen werden müssen. Der Großteil der Ladeelektronik ist dann beispielsweise in das Fahrzeug integriert.

Sofern von dem Stromversorgungsnetz eine Wechselspannung bereitgestellt wird, muss diese Wechselspannung von der Ladevorrichtung in eine für das Laden der Batterie geeignete Gleichspannung umgewandelt werden. Zur Realisierung derartiger Ladevorrichtungen werden daher häufig mehrstufige Schaltstrukturen verwendet, die beispielsweise einen Netzfilter, einen Tiefsetzsteller, einen Zwischenkreis und einen Hochsetzsteller umfassen können.

Aus der Druckschrift WO 2010/103063 A1 ist in diesem Zusammenhang bekannt, bei der Realisierung eines Batterieladegeräts anstelle eines eigens für die Ladevorrichtung bereitgestellten Hochsetzstellers den Antriebsumsetzer des Elektroantriebs und anstelle eines eigens für die Ladevorrichtung bereitgestellten Zwischenspeichers die Induktivitäten des Elektromotors zu verwenden.

### Offenbarung

Die Erfindung ist in den Ansprüchen 1, 6 und 9 offenbart.

Dabei kann jeweils vorgesehen sein, dass der Antriebsumsetzer bzw. der Hochsetzsteller der Ladevorrichtung im Ladebetrieb als Hochsetzsteller arbeitet, im Motorbetrieb jedoch als Tiefsetzsteller fungiert.

Ein Vorteil der vorliegenden Erfindung besteht darin, dass mit ihr im Vergleich zum Stand der Technik kostengünstigere Ladegeräte unter Verwendung elektrischer Bauelemente des Elektroantriebs sowie entsprechende Ladeverfahren bereitgestellt werden können.

In einer vorteilhaften Ausgestaltung handelt es sich bei der zu ladenden Batterie um die Antriebsbatterie des batteriebetriebenen Elektroantriebs.

Weitere vorteilhafte Ausgestaltungen sind Gegenstand der jeweiligen Unteransprüche.

### Vorteile der Erfindung

Ausgangspunkt ist die Verwendung von Komponenten eines batteriebetriebenen Elektroantriebes, insbesondere die Verwendung des Elektromotors und des Antriebsumsetzers, zur Realisierung einer mehrstufigen Ladevorrichtung mit Hochsetzsteller, Tiefsetzsteller und Zwischenkreis. Entgegen der im Stand der Technik bekannten Ausführungsformen schlägt die vorliegende Erfindung jedoch eine besondere Ankoppelung des netzseitigen Tiefsetzstellers an den Elektromotor und den Antriebsumsetzer vor. Insbesondere wird vorgeschlagen, die elektrische Verbindung des netzseitigen Tiefsetzstellers an den Elektromotor so auszugestalten, dass durch mindestens eine der mindestens drei Spulen des Elektromotors jeweils der gesamte oder zumindest der halbe Ladestrom fließt. Diese Bestromung entspricht, zumindest für kurze Zeitpunkte, der im Antriebsmodus des Elektroantriebs am Elektromotor anliegenden Bestromung.

Der erfindungsgemäße Aufbau ermöglicht im Vergleich zum Stand der Technik die Verwendung gewöhnlicher Elektromotoren, bei denen der Sternpunkt nicht nach aussen hin kontaktierbar sein muss und ermöglicht ferner das Erreichen einer größeren Induktivität und damit glattere Ladeströme. Die glatteren Ladeströme erlauben ein schonenderes Laden der Batterie und gewährleisten eine gute Regelbarkeit der Ladevorrichtung.

### Kurze Beschreibung der Zeichnungen

Es zeigen:
- Fig. 1: eine schematische Darstellung eines mehrstufigen Ladegerätes
- Fig. 2a: eine schematische Darstellung eines batteriebetriebenen Elektroantriebs mit sternförmig angeordneten Spulen
- Fig. 2b: eine schematische Darstellung des Stromverlaufs bei sternförmig angeordneten Spulen
- Fig. 2c: eine schematische Darstellung eines batteriebetriebenen Elektroantriebs mit dreiecksförmig angeordneten Spulen
- Fig. 3: eine schematische Darstellung einer ersten Ausführungsform einer erfindungsgemäßen Ladevorrichtung
- Fig. 4: eine schematische Darstellung einer zweiten Ausführungsform einer erfindungsgemäßen Ladevorrichtung
- Fig. 5: eine schematische Darstellung einer dritten Ausführungsform einer erfindungsgemäßen Ladevorrichtung
- Fig. 6: eine schematische Darstellung einer vierten Ausführungsform einer erfindungsgemäßen Ladevorrichtung
- Fig. 7: eine schematische Darstellung eines Verfahrens zum Bereitstellen einer Ladevorrichtung

In den Figuren der Zeichnung sind gleiche und funktionsgleiche Elemente, Merkmale und Komponenten - sofern nichts Anderes ausgeführt ist - jeweils mit denselben Bezugszeichen versehen. Es versteht sich, dass Komponenten und Elemente in den Zeichnungen aus Gründen der Übersichtlichkeit und Verständlichkeit nicht notwendigerweise maßstabsgetreu zueinander wiedergegeben sind.

### Ausführungsformen

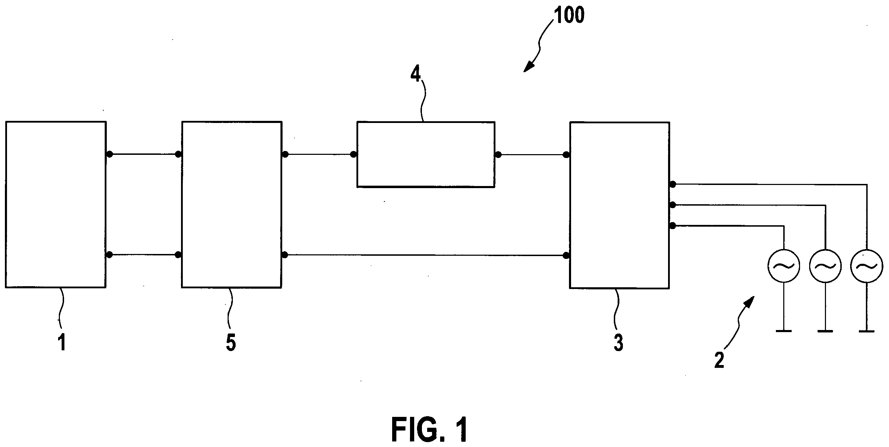

Fig. 1 zeigt eine schematische Darstellung einer mehrstufigen Ladevorrichtung 100 zum Laden einer Batterie bzw. eines Akkumulators 1. Hierzu wird die Batterie 1 elektrisch mit einem Stromnetz, beispielsweise einem öffentlichen Stromversorgungsnetz, verbunden. Dabei kann durch das Stromnetz beispielsweise ein dreiphasiger Wechselstrom bereitgestellt werden. Fig. 1 zeigt eine Ausführungsform der Ladevorrichtung 100, bei der der Anschluss 2 als dreiphasiger Wechselstrom-Anschluss ausgebildet ist, bei dem auf drei Leitungen jeweils ein näherungsweise sinusförmiger, um jeweils 120° zueinander phasenverschobener Wechselstrom bereitgestellt wird. Es ist jedoch auch ein Anschluss an ein einphasiges Wechselstromnetz möglich.

Zum Anschluss an das Stromnetz kann die Ladevorrichtung ferner einen (in Fig. 1 nicht dargestellten) Netzfilter umfassen. Die Verwendung eines derartigen Netzfilters ist optional und für den Betrieb der Ladevorrichtung nicht zwingend erforderlich. Sie kann jedoch vorteilhaft sein, um bei einer zeitlich variablen Stromentnahme unerwünschte Rückkopplungen (Spannungsspitzen, etc.) in das Stromnetz zu vermeiden Eine derart variable Stromentnahme kann beispielsweise bei Verwendung eines unten näher beschriebenen gepulsten Gleichrichters auftreten, da dieser nur zeitweise Leistung aus dem Netz entnimmt. Ein Netzfilter kann hierbei insbesondere dazu dienen, die von den Betreibern der Stromversorgungsnetze gestellten Grenzwerte für Störungen des Netzes einzuhalten. Es können beliebige im Stand der Technik bekannte Netzfilter verwendet werden, beispielsweise können die drei Leitungen des Netzanschlusses mittels Kapazitäten miteinander verkoppelt werden.

Die in Fig. 1 dargestellte Ladevorrichtung 100 umfasst ferner einen Tiefsetzsteller 3, einen Zwischenkreis 4 und einen Hochsetzsteller 5, um die von dem Stromnetz bereitgestellte (dreiphasige) Wechselspannung in eine zur Ladung der Batterie 1 geeignete, näherungsweise konstante Ladespannung umzuwandeln. Die Ladespannung kann dabei je nach Batterie im Bereich 100V-1000V, insbesondere im Bereich 250V-450V liegen. Der mehrstufige Aufbau der in Fig. 1 gezeigten Ladevorrichtung ermöglicht es, mit der Ladevorrichtung einen derartigen Spannungsbereich abzudecken. Selbstverständlich kann die Ladevorrichtung auch um weitere Stufen ergänzt werden.

Der Tiefsetzsteller 3 wird oftmals auch als Abwärtswandler (engl: buck converter bzw. step down converter) bezeichnet und stellt einen ein- oder mehrphasigen Gleichrichter dar, der den eingangsseitig über das Stromnetz anliegenden Wechselstrom wechselweise mit der Ladevorrichtung verbindet und somit Stücke aus dem Wechselstrom derart herausschneidet, dass ausgangsseitig ein gleichgerichteter Strom bereitgestellt werden kann, der je nach Ausgestaltung und Güte des Gleichrichters mehr oder weniger einem glatten Gleichstrom ähnelt. Bei dem Tiefsetzsteller 3 kann es sich beispielsweise um einen beliebigen stromzwischenkreisbasierten Gleichrichter handeln. Der Tiefsetzsteller kann vorteilhafterweise dazu geeignet sein, einen Ausgabestrom mit einer Spannung bereitstellen, die im Zeitmittel kleiner oder gleich der Eingangsspannung ist.

Der Zwischenkreis 4 dient der Koppelung von Tiefsetzsteller 3 und Hochsetzsteller 5. Er dient dazu, den von dem Tiefsetzsteller ausgegebenen näherungsweisen Gleichstrom weiter zu glätten (sog. Gleichstromzwischenkreis) und umfasst beispielsweise eine oder mehrere Spulen oder Induktivitäten bzw. eine oder mehrere Speicherdrosseln. Im Idealfall wird ausgangs des Zwischenkreises ein idealer Gleichstrom bereitgestellt. In realen Anwendungen ergibt sich ein geglätteter Strom, wobei größere Induktivitätswerte zu einer stärkeren Glättung führen. Der Zwischenkreis 4 in Fig. 1 ist nur zwischen einen Ausgang des Tiefsetzstellers 3 und einen Eingang des Hochsetzstellers 5 geschaltet. Alternativ kann der Zwischenkreis aber auch an beide Ausgänge des Tiefsetzstellers 3 und beide Eingänge des Hochsetzstellers gekoppelt werden. Bei dem Zwischenkreis handelt es sich vorteilhafterweise um einen Stromzwischenkreis oder einen Gleichstromzwischenkreis.

Der in Fig. 1 gezeigte Hochsetzsteller 5 ist zwischen den Tiefsetzsteller 3 bzw. den Zwischenkreis 4 und die Batterie 1 gekoppelt und versorgt die Batterie mit der gewünschten Lade-Gleichspannung. Der Hochsetzsteller 5 dient dazu, ausgehend von dem eingangsseitig bereitgestellten geglätteten und gleichgerichteten Strom eine gleich große oder größere Gleichspannung an die Batterie bereitzustellen. Hochsetzsteller werden oftmals auch als Aufwärtswandler (engl: boost converter bzw. step up converter) bezeichnet.

Der in Fig. 1 dargestellte mehrstufige Aufbau der Ladevorrichtung 100 mit Tiefsetzsteller 3 und Hochsetzsteller 5 dient dazu, über eine Reduzierung der netzseitig bereitgestellten Eingangsspannung im Tiefsetzsteller 3 und/oder eine Erhöhung der Spannung mit dem Hochsetzsteller 5 die für die Ladung der Batterie 1 jeweils ideale Ladespannung bereitzustellen.

Um die Ladevorrichtung 100 möglichst einfach, platzsparend und kostengünstig bereitstellen zu können, werden erfindungsgemäß für den Hochsetzsteller 5 und den Zwischenkreis 4 Komponenten des Elektroantriebes verwendet. Speziell wird für den Hochsetzsteller 5 der Antriebsumsetzer des Elektroantriebs verwendet und für den Zwischenkreis der Elektromotor bzw. die Elektro-Maschine des Elektroantriebs.

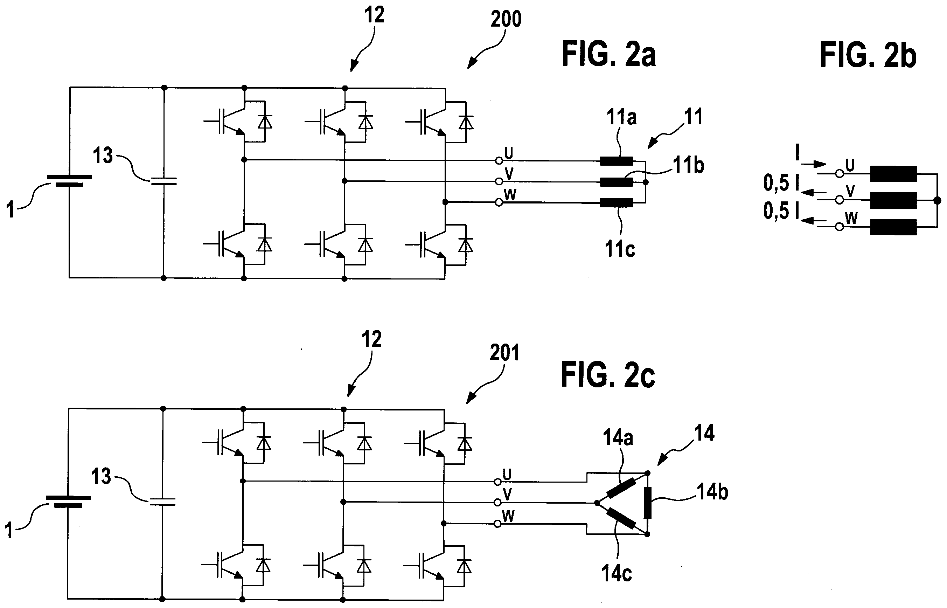

Fig. 2a zeigt schematisch den Aufbau eines gewöhnlichen, batteriebetriebenen Elektroantriebs 200. Der Elektroantrieb 200 umfasst eine (Antriebs-) Batterie 1, einen Elektromotor 11 und einen Antriebsumsetzer 12. Die Batterie 1 dient beim Betrieb des Elektromotors 11 als Motor (sog. Motorbetrieb) als Strom- bzw. Spannungsquelle und stellt näherungsweise eine (im Zuge der Entladung der Batterie zeitlich langsam abnehmende) Gleichspannung bereit. Der Antriebsumsetzer 12 dient der Umsetzung des von der Batterie bereitgestellten Gleichstroms in einen Wechselstrom und kann auch als Wechselrichter oder DC/AC-Wandler bezeichnet werden. Er kann beim Betrieb des Elektromotors als Motor (Motorbetrieb) insbesondere als Tiefsetzsteller arbeiten und dabei an dem Elektromotor 11 eine Spannung bereitstellen, die gleich oder kleiner als die Batteriespannung ist. Bei den in Fig. 2 dargestellten Antriebsumsetzer 12 handelt es sich um einen dreiphasigen, gepulsten Wechselrichter oder Pulswechselrichter, der die von der Batterie bereitgestellte Gleichspannung in den drei Zweigen U, V und W in jeweils um 120° verschobene Wechselspannungspulse zerlegt und diese dem Elektromotor 11 zuführt. Darüber hinaus ist in Fig. 2a exemplarisch ein optionaler Kondensator 13 gezeigt, der parallel zu der Batterie 1 geschaltet werden kann und der Bereitstellung der Strompulse im Motorbetrieb dient. Es versteht sich von selbst, dass anstelle oder zusätzlich zu dem Kondensator 13 noch weitere elektronische Bauelemente vorgesehen sein können, um den Antriebsstrom zu formen.

Der in Fig. 2a gezeigte Antriebsumsetzer 12 besteht aus insgesamt drei Zweigen U, V, W mit jeweils zwei Schalttransistoren und jeweils zwei Dioden. Die Umsetzung in den Wechselstrom kann dabei über die Schalttransistoren in bekannter Weise gesteuert werden. Da der Betrieb von gepulsten Wechselrichtern im Stand der Technik bekannt ist, wird aus Gründen der Übersichtlichkeit auf eine detaillierte Beschreibung der Ansteuerung verzichtet. Alternativ zu dem in Fig. 2a gezeigten Antriebsumsetzer 12 können selbstverständlich auch beliebige andere DC/AC-Umsetzer verwendet werden.

Bei dem in Fig. 2a gezeigten Elektromotor 11 handelt es sich um einen dreiphasigen Elektromotor mit drei Antriebsspulen bzw. Induktivitäten 11a, 11b, 11c. Anstelle von drei Antriebsspulen können dabei auch mehrere Spulen verwendet werden, vorteilhafterweise aber ganzzahlige Vielfache von drei Spulen, d.h. anstelle von drei Spulen können beispielsweise drei Spulenpaare verwendet werden. Sofern im Folgenden vereinfachend nur von drei Spulen gesprochen wird, so sollen damit auch Ausführungsformen mit entsprechenden Spulenpaaren, -tripeln, etc umfasst sein.

Die in Fig. 2a gezeigten Spulen 11a, 11b, 11c sind sternförmig angeordnet und verschaltet, d.h. ein Ende der drei Spulen 11a, 11b, 11c ist jeweils mit einem Zweig U, V, W des Antriebsumsetzers 12 verbunden, wohingegen die anderen Enden der drei Spulen 11a, 11b, 11c jeweils sternförmig an einem Sternpunkt miteinander verbunden sind. Beim Betrieb des Elektromotors 11, d.h. wenn der Elektromotor als Antriebsmotor betrieben wird und ein anzutreibendes Objekt antreibt, läuft der Strom dabei zeitweise derart, dass er vollständig durch einen der drei Zweige U, V, W und eine der drei Spulen 11a, 11b, 11c läuft und zur Hälfte jeweils durch die beiden anderen Zweige und Spulen zurück läuft. Dies ist schematisch in Fig. 2b veranschaulicht.

Fig. 2c zeigt eine Ausführungsform eines Elektroantriebs 201, bei dem die Spulen 14a, 14b, 14c des Elektromotors 14 dreiecksförmig angeordnet und beschaltet sind. Die Ausführungen zu dem Elektromotor 11 aus Fig. 2a sind hierauf analog übertragbar. Im Betriebsmodus des Elektromotors 14 läuft der Strom zeitweise vollständig durch einen Zweig U und zur Hälfte durch die beiden anderen Zweige V, W und die Spulen 14a, 14b zurück.

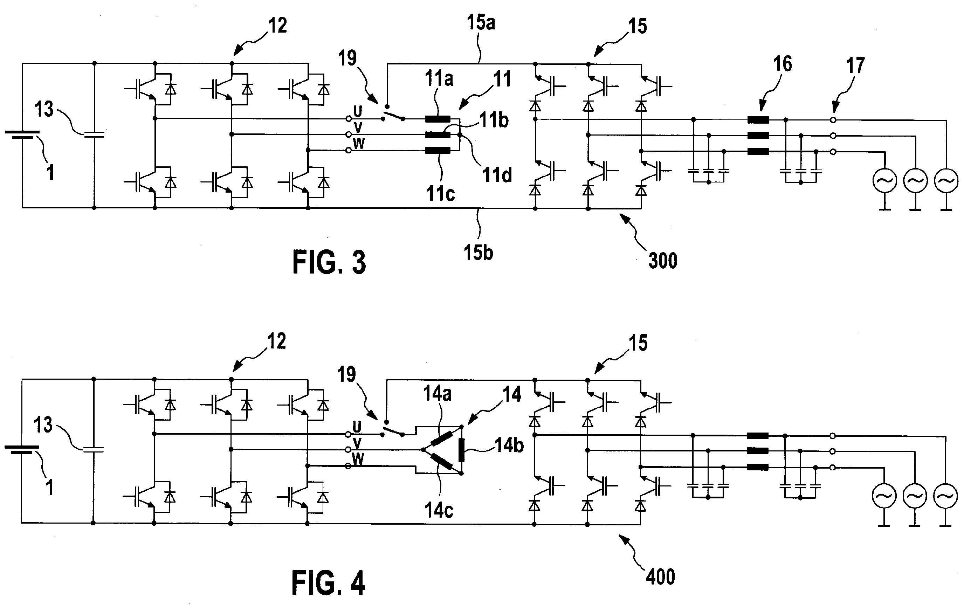

Fig. 3 ist eine schematische Darstellung einer erfindungsgemäßen Ladevorrichtung 300 zum Laden einer Batterie 1 gemäß einer ersten Ausführungsform. Die Ladevorrichtung 300 zum Laden der Batterie 1 entspricht der in Fig. 1 gezeigten zweistufigen Ladevorrichtung und besteht aus einem (optionalen) Netzfilter 16, einem Tiefsetzsteller 15, einem Zwischenkreis 11 und einem Hochsetzsteller 12. Der Tiefsetzsteller 15 ist ein dreiphasiger Gleichrichter, der den vom Stromnetz am Anschluss 17 anliegenden ein- oder dreiphasigen Wechselstrom gleichrichtet und damit je nach Güte der Gleichrichtung näherungsweise in einen Gleichstrom umsetzt. Durch eine geeignete Ansteuerung des Tiefsetzstellers 15 kann der Tiefsetzsteller verglichen mit der netzseitig bereitgestellten Spannung einen Strom gleicher oder niedrigerer Spannung bereitstellen. Ein Netzfilter 16 mit Induktivitäten und Kondensatoren dient der Vermeidung oder der Reduktion unerwünschter Rückkopplungen in das Stromnetz. Der Zwischenkreis 11 umfasst mehrere Induktivitäten und dient der Glättung des von dem Tiefsetzsteller 15 bereitgestellten, gleichgerichteten Stromes. Der Hochsetzsteller 12 ist ein dreiphasiger Pulswechselrichter und kann an seinen mit der Batterie 1 verbundenen Ausgängen eine Spannung bereitstellen, die im Zeitmittel gleich oder größer als die vom Tiefsetzsteller 15 bzw. dem Zwischenkreis 11 bereitgestellte Spannung ist. Über eine entsprechende Ansteuerung der Transistoren in Tiefsetzsteller 15 und Hochsetzsteller 12 kann die an der Batterie 1 anliegende Spannung an die erforderliche Ladespannung in einem Bereich von 100V-1000V, insbesondere in einem Bereich von 250V-450V angepasst werden.

Vorteilhafterweise handelt es sich bei der Batterie 1 um die Antriebsbatterie eines Elektromotors 2. Beispielsweise kann es sich bei der Batterie 1 um eine Traktionsbatterie eines elektrisch angetriebenen Fahrzeugs, beispielsweise eines PKWs handeln. Der Aufbau des Elektroantriebs kann dabei den in Fig. 2a-2c vorgestellten Elektroantrieben entsprechen.

Ein wesentlicher Aspekt der in Fig. 3 dargestellten erfindungsgemäßen Ladevorrichtung 300 und der weiter unten folgenden Ladevorrichtungen 400-600 ist, dass der Hochsetzsteller 12 und der Zwischenkreis 11 der Ladevorrichtung durch Bauelemente des mit der Batterie 1 verbundenen Elektroantriebs realisiert werden. Speziell wird der Hochsetzsteller 12 durch den Antriebsumsetzer des Elektroantriebs gebildet und der Zwischenkreis durch den Elektromotor des Elektroantriebs bzw. die darin befindlichen Spulen/Induktivitäten. Der Antriebsumsetzer dient, wie bereits oben in Bezug auf Fig. 2 dargestellt, im Antriebs- bzw. Fahrmodus zum Umsetzen der von der Batterie stammenden Gleichspannung in eine Wechselspannung für den Elektromotor und wird im Lademodus als Hochsetzsteller verwendet. Der Elektromotor dient, wie bereits oben in Bezug auf Fig. 2 dargestellt, im Antriebs- bzw. Fahrmodus zum Antreiben einer anzutreibenden Vorrichtung, beispielsweise der Räder eines Elektrofahrzeugs, und dient im Lademodus als Zwischenkreis zur Glättung des gleichgerichteten Stromes.

Die Verwendung von Antriebskomponenten wie dem Antriebsumsetzer und dem Elektromotor in einer Ladevorrichtung für die Antriebsbatterie ist bereits in der oben genannten Druckschrift WO2010/103063 beschrieben. Allerdings lehrt diese Druckschrift, die Spulen des Elektromotors sternförmig zu verschalten und den Sternpunkt des Elektromotors nach Aussen hin für die Ankoppelung des Tiefsetzstellers zugänglich zu machen. Die gemäß der in Fig. 3 gezeigten Ausführungsform schlägt demgegenüber vor, die Spulen 11a, 11b, 11c des Elektromotors 11 sternförmig zu verschalten, ohne den Sternpunkt nach Aussen hin zugänglich zu machen, d.h. die Spulen werden an einem ersten Ende jeweils unmittelbar miteinander verbunden, ohne dass der Sternpunkt 11d unmittelbar mit dem Tiefsetzsteller 15 oder dem Hochsetzsteller 12 oder weiteren Bauelementen kontaktiert wird. Bezüglich der zweiten Spulenenden der Spulen 11a, 11b, 11c wird eine erste Spule 11a schaltbar mit einem ersten Zweig U des Hochsetzstellers 12 verbunden, während die anderem Spulen 11b, 11c vorzugsweise fest mit dem zweiten bzw. dritten Zweig V bzw. W des Hochsetzstellers 12 verbunden werden. Im Antriebsmodus wird der Schalter 19 geschlossen, so dass das zweite Ende der Spule 11a mit dem ersten Zweig U des Antriebsumsetzes 12 bzw. des Hochsetzstellers 12 der Ladevorrichtung verbunden ist, nicht aber mit dem Tiefsetzsteller 15. Die in dieser Schalterstellung resultierende Anordnung entspricht im Wesentlichen dem in Fig. 2a gezeigten Elektroantrieb und weist dieselbe Funktionalität auf. Die über den Zweig 15b noch ankontaktierten Schaltelemente des Tiefsetzstellers 15 beeinträchtigen die Funktionsweise allenfalls im Rahmen parasitärer Einflüsse, so dass auf die obigen Ausführungen zu Fig. 2a verwiesen werden kann. Insbesondere liegt im Antriebsmodus zeitweise der in Fig. 2b gezeigte Stromfluss vor.

Als Schalter können dabei beliebige, im Stand der Technik bekannte Schalter verwendet werden. Insbesondere können an die jeweiligen Stromflüsse und Spannungen angepasste Leistungshalbleiter verwendet werden.

Zum Laden der Antriebsbatterie 1 wird der Schalter 19 so umgeschaltet, dass die Verbindung des zweiten Endes der Spule 11a zu dem ersten Zweig U des Hochsetzstellers 12 getrennt wird und stattdessen mit dem Tiefsetzsteller 15 über die Zuleitung 15a verbunden ist. Da die Zusammenschaltung von Zwischenkreis 11 und Tiefsetzsteller 15 idealisiert als Gleichspannungsquelle betrachtet werden kann, ergibt sich im Ladebetrieb bei dieser Anordnung ebenfalls der in Fig. 2b dargestellte Stromverlauf. Die sternförmige Beschaltung der Spulen 11a, 11b, 11c wird hierdurch nicht aufgelöst.

Die in Fig. 3 gezeigte Ausführungsform unterscheidet sich damit grundlegend von der in der Druckschrift WO2010/103063 beschriebenen Schaltung, bei der sich der Strom im Ladebetrieb gleichmäßig über die drei Spulen des Elektromotors verteilt. Die Ladevorrichtung 300 weist demgegenüber mehrere Vorteile auf: Da bei der Ladevorrichtung 300 der Sternpunkt des Elektromotors nicht nach aussen kontaktiert werden muss, lassen sich in dieser Schaltung gewöhnliche Elektromotoren verwenden. Insbesondere müssen keine speziell angefertigten Elektromotoren mit kontaktiertem Sternpunkt verwendet werden, so dass sich auch hinsichtlich der Auswahl von Elektromotoren bzw. Zulieferern keine Einschränkungen ergeben. Darüber hinaus ergibt sich bei der erfindungsgemäßen Anordnung eine höhere Induktivität und, da die Ladeströme durch die einzelnen Spulen mit I bzw. 0,5*I jeweils größer als die Ströme in der Anordnung der WO2010/103063 sind, die jeweils nur 1/3*I betragen, auch ein stärkeres Magnetfeld. Da die Ladeströme typischerweise geringer als die Ströme beim Betrieb des Elektromotors als Motor sind, ist für die erfindungsgemäße Ladevorrichtung 300 keine Anpassung der Dimensionierung erforderlich. Es sei jedoch darauf hingewiesen, dass sich die oben angegebene Aufteilung des Ladestroms auf 0,5 über die Ansteuerung des Hochsetzstellers beeinflussen lässt und dieses Verhältnis für eine symmetrische Ansteuerung der Zweige des Hochsetzstellers/Antriebsumsetzers gilt. Sofern von einer symmetrischen Ansteuerung nur kurzfristig abgewichen wird, dürfte sich das oben angegebene Verhältnis zumindest im Zeitmittel einstellen. Der bei der erfindungsgemäßen Anordnung erzeugte Stromfluss entspricht dabei jeweils dem Stromfluss im Antriebsmodus des Elektromotors, d.h. der Elektromotor arbeitet auch im Ladebetrieb mit optimaler und damit großer Induktivität. Die im Vergleich zum Stand der Technik höhere Induktivität erlaubt, wie bereits weiter oben erwähnt, die Erzeugung glatterer Ladestromverläufe und somit eine schonendere Ladung der Batterie 1 sowie eine gute Regelbarkeit.

Vorteilhafterweise kann die Ladevorrichtung 300 um eine Sperrvorrichtung zum Sperren des Elektromotors 11 während des Ladevorgangs ergänzt werden, um eine Drehung des Elektromotors 11 während des Ladevorgangs zu vermeiden. Als Sperrvorrichtung bei elektrisch betriebenen Fahrzeugen eignet sich beispielsweise eine Getriebesperrklinke, eine Parksperre oder ähnliches.

Fig. 4 ist eine schematische Darstellung einer Ladevorrichtung 400 gemäß einer zweiten Ausführungsform. Bei dieser Ausführungsform sind im Vergleich zu der Ladevorrichtung 300 die Spulen des Elektromotors/Zwischenkreises 14 nicht sternförmig, sondern dreiecksförmig verschaltet. Im Ladebetrieb wird über den Schalter 19 der Tiefsetzsteller 15 mit den beiden Spulen 14a, 14b des Elektromotors verbunden, wohingegen im Antriebsmodus der Schalter 19 die beiden Spulen 14a und 14b mit dem ersten Zweig des Antriebsumsetzers 12 bzw. des Hochsetzstellers 12 der Ladevorrichtung verbindet. Im Vergleich zur Sternschaltung werden bei der Dreiecksschaltung bei symmetrischer Ansteuerung des Hochsetzstellers/Antriebsumsetzers 12 nur zwei der drei Spulen bestromt, nämlich die Spulen 14a und 14b, wobei sich der Strom bei symmetrischer Ansteuerung des Hochsetzstellers 12 gleichmäßig auf beide Spulen verteilt.

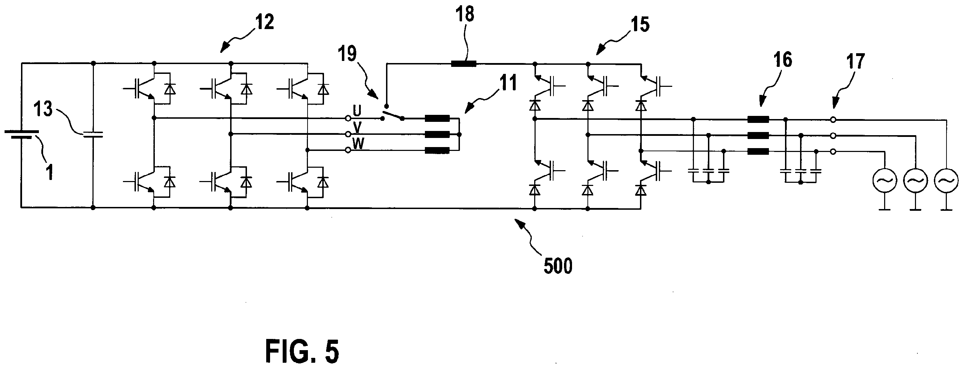

Fig. 5 ist eine schematische Darstellung einer Ladevorrichtung 500 gemäß einer dritten, vorteilhaften Ausführungsform. Diese Ausführungsform entspricht weitestgehend der in Fig. 3 gezeigten Ausführungsform, weist darüber hinaus aber einen zusätzliche Induktivität 18 auf. Die zusätzliche Induktivität 18 kann vorteilhaft sein, falls die durch den Elektromotor 11 bereitgestellte Induktivität nicht ausreicht, um im Ladebetrieb einen hinreichend konstanten Gleichstrom zu erzeugen. Die zusätzliche Induktivität 18 kann dazu dienen, eine verbleibende Welligkeit des durch Tiefsetzsteller 15 und Zwischenkreis 11 gleichgerichteten Stromes weiter zu reduzieren und den gleichgerichteten Strom von dem Tiefsetzsteller 15 besser zu glätten. Dies kann insbesondere zur Schonung der Batterie 1 vorteilhaft sein, wenn die ansonsten beim Laden auftretenden verbleibende Stromwelligkeit die Lebensdauer der Batterie reduzieren könnten. Selbstverständlich kann die in Fig. 5 gezeigte zusätzliche Induktivität auch in sämtlichen anderen Ausführungsformen angewendet werden, also insbesondere in Verbindung mit der Dreiecksschaltung aus Fig. 4.

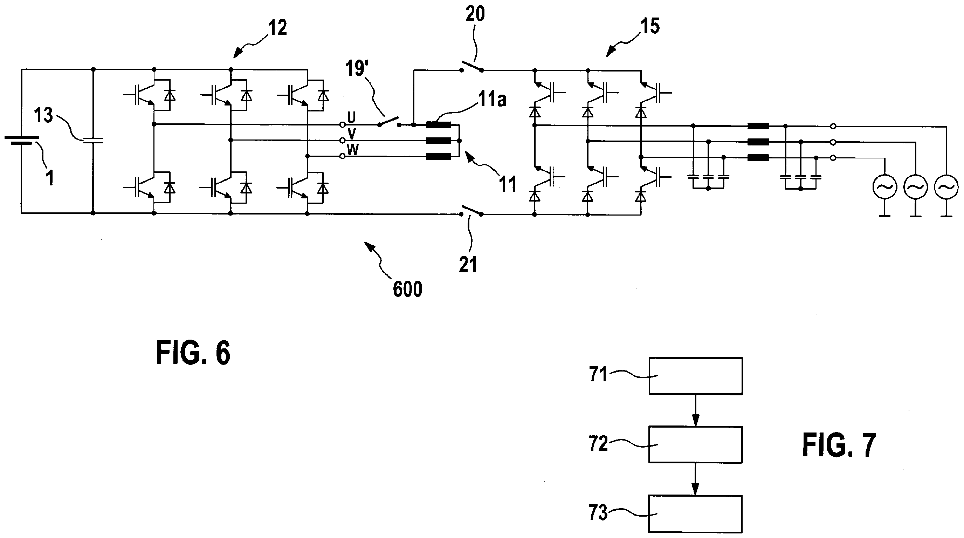

Fig. 6 ist eine schematische Darstellung einer Ladevorrichtung 600 gemäß einer vierten, vorteilhaften Ausführungsform. Dabei ist im Vergleich zu der in Fig. 3 gezeigten Ausführungsform der Schalter 19' so ausgeführt, dass er lediglich als Unterbrecher der Verbindung einer Spule 11a des Elektromotors zu dem entsprechenden Zweig des Hochsetzstellers 12 fungiert. Zudem sind zusätzliche Schalter 20 und 21 vorgesehen, um vorzugsweise beim Betrieb des Elektromotors (Antriebsmodus) den Tiefsetzsteller 15 der Ladevorrichtung und die damit einhergehenden parasitären Kapazitäten und Induktivitäten von dem Elektromotor abzukoppeln. Dies kann eine Erhöhung des Wirkungsgrades bewirken und die elektromagnetische Verträglichkeit verbessern. Natürlich ist es hierbei auch möglich, nur einen der beiden Schalter 20 oder 21 vorzusehen. Die Schalter 19', 20 und 21 können dabei in beliebiger Kombination auch in den oben vorgestellten Ausführungsformen verwendet werden.

Fig. 7 zeigt schematisch ein Verfahren zum Bereitstellen einer Ladevorrichtung für eine Batterie 1 eines batteriebetriebenen Elektroantriebes. Hierbei wird in einem Schritt 71 ein Tiefsetzsteller 15 nach einer der obigen Ausführungsformen bereitgestellt. Der Tiefsetzsteller ist mit einem Wechselstromnetz verbindbar und kann an seinen Ausgängen einen gleichgerichteten Strom gleicher oder geringerer Spannung bereitstellen. In einem Schritt 72 wird ein Zwischenkreis 11; 14 nach einer der obigen Ausführungsformen bereitgestellt, der mit den Ausgängen des Tiefsetzstellers 15 verbindbar ist und Spulen 11a; 11b, 11c; 14a, 14b, 14c zur Glättung des gleichgerichteten Stromes aufweist. In einem Schritt 73 wird ein Hochsetzstellers 12 nach einer der obigen Ausführungsformen bereitgestellt, der den geglätteten Strom des Zwischenspeichers 11; 14 in einen Strom mit gleicher oder größerer Spannung umsetzen kann und mit der Batterie 1 verbunden wird, wobei zum Bereitstellen des Zwischenspeichers 11; 14 der Elektromotor des Elektroantriebs verwendet wird und wobei zum Bereitstellen des Hochsetzstellers 12 der Antriebsumsetzer des Elektroantriebes verwendet wird und wobei beim Laden der Batterie 1 ein erster Anschluss einer Spule 11a; 14a des Elektromotors 11; 14 elektrisch mit dem Tiefsetzsteller 15 verbunden ist und wobei beim Betrieb des Elektromotors ein Schalter 19; 19' denselben Anschluss der Spule 11a; 14a elektrisch mit dem Hochsetzsteller 12 verbindet. Die einzelnen Verfahrensschritte müssen dabei nicht notwendigerweise in der oben angegebenen Reihenfolge ausgeführt werden.

Die Ladevorrichtungen sind vorteilhafterweise derart ausgebildet, dass sie sowohl für die Verwendung eines dreiphasigen Wechselstroms als auch für die Verwendung eines einphasigen Wechselstroms geeignet ist. Für den einphasigen Betrieb sind lediglich zwei der drei Eingangsbrückenzweige des Tiefsetzstellers zu verwenden. In diesem Betriebszustand hat die Ansteuerung so zu erfolgen, dass der eingangsseitige Stromzwischenkreisumrichter gesteuert betrieben wird und der ausgangsseitige Hochsetzsteller die PFC (Power Factor Corrector) Funktionalität übernimmt. Es ist lediglich mit der Eingangsstufe sicherzustellen, dass die mittlere Ausgangsspannung des Tiefsetzers kleiner als die Batteriespannung ist damit der ausgangsseitige Hochsetzsteller arbeiten kann.

## Patentansprüche

1. Ladevorrichtung (100; 300; 400; 500; 600) zum Laden einer Batterie (1) eines batteriebetriebenen Elektroantriebes, umfassend:
- einen Tiefsetzsteller (15), der ein ein- oder mehrphasiger Gleichrichter ist, der mit einem ein- oder dreiphasigen Wechselstromnetz verbindbar ist und dazu ausgelegt ist, an seinen Ausgängen einen gleichgerichteten Strom bereitzustellen;
- einen Zwischenkreis (11; 14), der mit mindestens einem Ausgang des Tiefsetzstellers (15) elektrisch verbindbar ist und mindestens eine Induktivität zur Glättung des Stromes aufweist;
- einen Hochsetzsteller (12), der dazu ausgelegt ist, an mindestens einem Eingang über den Zwischenkreis (11; 14) mit dem Tiefsetzsteller (15) elektrisch verbunden zu werden und an seinen Ausgängen elektrisch mit der Batterie (1) verbunden ist und der dazu geeignet ist, die vom Tiefsetzsteller (15) und/oder dem Zwischenkreis (11; 14) bereitgestellte Spannung in eine gleich große oder höhere Spannung zum Laden der Batterie (1) umzusetzen,
- wobei der Hochsetzsteller (12) durch den Antriebsumsetzer des Elektroantriebs gebildet wird und der Zwischenkreis (11; 14) durch einen Elektromotor des Elektroantriebs gebildet wird;
**dadurch gekennzeichnet, dass**
beim Laden der Batterie (1) ein erster Anschluss der Spule (11a; 14a) des Elektromotors (11; 14) elektrisch mit dem Tiefsetzsteller (15) verbunden ist und dass beim Betrieb des Elektromotors ein Schalter (19; 19') denselben Anschluss der Spule (11a; 14a) elektrisch mit dem Hochsetzsteller (12) verbindet.

2. Ladevorrichtung (100; 300; 400; 500; 600) nach Anspruch 1, wobei der Elektromotor mindestens drei sternförmig oder dreiecksförmig miteinander verschaltete Spulen (11a; 11b, 11c; 14a, 14b, 14c) umfasst.

3. Ladevorrichtung (100; 300; 500; 600) nach Anspruch 2, wobei der Schalter (19; 19') gewährleistet, dass beim Laden der Batterie (1) durch eine der Spulen (11a) des Elektromotors (11) jeweils der gesamte Ladestrom fließt.

4. Ladevorrichtung (100; 300; 500; 600) nach einem der vorhergehenden Ansprüche, wobei die mindestens drei Spulen (11a; 11b, 11c) des Elektromotors (11) sternförmig miteinander verbunden sind und vom Sternpunkt aus nur Anschlüsse zu den mindestens drei Spulen (11a; 11b, 11c) des Elektromotors (11) bestehen.

5. Ladevorrichtung (100; 400) nach Anspruch 1, wobei der Elektromotor mindestens drei dreiecksförmig miteinander verbundene Spulen (14a, 14b, 14c) umfasst und wobei der Schalter (19') gewährleistet, dass beim Laden der Batterie (1) durch eine der Spulen (11a) des Elektromotors (11) im Zeitmittel jeweils der halbe Ladestrom fließt.

6. Verfahren zum Bereitstellen einer Ladevorrichtung (100; 300; 400; 500; 600) für eine Batterie (1) eines batteriebetriebenen Elektroantriebes, mit den Schritten:
- Bereitstellen eines Tiefsetzstellers (15), der ein ein- oder mehrphasiger Gleichrichter ist, der mit einem Wechselstromnetz verbindbar ist und an seinen Ausgängen einen gleichgerichteten Strom gleicher oder geringerer Spannung bereitstellen kann;
- Bereitstellen eines Zwischenkreises (11; 14), der mit den Ausgängen des Tiefsetzstellers (15) verbindbar ist und Spulen (11a; 11b, 11c; 14a, 14b, 14c) zur Glättung des gleichgerichteten Stromes aufweist;
- Bereitstellen eines Hochsetzstellers (12), der den geglätteten Strom des Zwischenkreises (11; 14) in einen Strom mit gleicher oder größerer Spannung umsetzen kann und mit der Batterie (1) verbunden ist,
- wobei zum Bereitstellen des Zwischenkreises (11; 14) der Elektromotor des Elektroantriebs verwendet wird und wobei zum Bereitstellen des Hochsetzstellers (12) der Antriebsumsetzer des Elektroantriebes verwendet wird; und **dadurch gekennzeichnet, dass**
- beim Laden der Batterie (1) ein erster Anschluss einer Spule (11a; 14a) eines Elektromotors (11; 14) elektrisch mit dem Tiefsetzsteller (15) verbunden ist wobei, dass beim Betrieb des Elektromotors ein Schalter (19; 19') denselben Anschluss der Spule (11a; 14a) elektrisch mit dem Hochsetzsteller (12) verbindet.

7. Verfahren nach Anspruch 6, wobei beim Laden der Batterie (1) durch eine der Spulen (11a) des Elektromotors (11) jeweils der gesamte Ladestrom fließt.

8. Verfahren nach einem der Ansprüche 6 oder 7, wobei die mindestens drei Spulen oder Induktivitäten (11a; 11b, 11c) des Elektromotors (11) sternförmig miteinander verbunden sind und vom Sternpunkt aus nur Anschlüsse zu den mindestens drei Spulen (11a; 11b, 11c) des Elektromotors (11) bestehen.

9. Verwendung eines Antriebsumsetzers (12) und eines Elektromotors (11; 14) eines Elektroantriebs in einer Ladevorrichtung (100; 300; 400; 500; 600) zum Laden der Batterie (1) des Elektroantriebs, wobei der Antriebsumsetzer (12) als Hochsetzsteller und der Elektromotor (11; 14) als Zwischenkreis dient;
wobei beim Laden der Batterie (1) ein erster Anschluss einer Spule (11a; 14a) des Elektromotors (11; 14) elektrisch mit dem Tiefsetzsteller (15), der einen ein- oder mehrphasigen Gleichrichter darstellt, verbunden ist; und
wobei ein Schalter (19; 19') dazu geeignet ist, denselben Anschluss der Spule (11a; 14a) elektrisch mit dem Hochsetzsteller (12) zu verbinden,
- wobei der Tiefsetzsteller (15) mit einem ein- oder dreiphasigen Wechselstromnetz verbindbar ist und dazu ausgelegt ist, an seinen Ausgängen einen gleichgerichteten Strom bereitzustellen;
- der Zwischenkreis (11; 14) mit mindestens einem Ausgang des Tiefsetzstellers (15) elektrisch verbindbar ist und mindestens eine Induktivität zur Glättung des Stromes aufweist; und
- der Hochsetzsteller (12) dazu ausgelegt ist, an mindestens einem Eingang über den Zwischenkreis (11; 14) mit dem Tiefsetzsteller (15) elektrisch verbunden zu werden und an seinen Ausgängen elektrisch mit der Batterie (1) verbunden ist und dazu geeignet ist, die vom Tiefsetzsteller (15) und/oder dem Stromzwischenkreis (11; 14) bereitgestellte Spannung in eine gleich große oder höhere Spannung zum Laden der Batterie (1) umzusetzen.

## Claims

1. Charging device (100; 300; 400; 500; 600) for charging a battery (1) of a battery-operated electric drive, comprising:
- a step-down converter (15) which is a single-phase or multiphase rectifier that is connectable to a one- or three-phase AC network and is designed to provide a rectified current at its outputs;
- an intermediate circuit (11; 14) which is electrically connectable to at least one output of the step-down converter (15) and has at least one inductor for smoothing the current;
- a step-up converter (12) which is designed to be electrically connected to the step-down converter (15) at at least one input via the intermediate circuit (11; 14) and is electrically connected to the battery (1) at its outputs and which is suitable for converting the voltage provided by the step-down converter (15) and/or the intermediate circuit (11; 14) into an equally high or higher voltage for charging the battery (1),
- wherein the step-up converter (12) is formed by the drive converter of the electric drive and the intermediate circuit (11; 14) is formed by an electric motor of the electric drive;
**characterized in that**
during charging of the battery (1), a first connection of the coil (11a; 14a) of the electric motor (11; 14) is electrically connected to the step-down converter (15), and during the operation of the electric motor, a switch (19; 19') electrically connects the same connection of the coil (11a; 14a) to the step-up converter (12).

2. Charging device (100; 300; 400; 500; 600) according to Claim 1, wherein the electric motor comprises at least three coils which are connected to each other in a star configuration or in a delta configuration (11a; 11b, 11c; 14a, 14b, 14c).

3. Charging device (100; 300; 500; 600) according to Claim 2, wherein the switch (19; 19') ensures that during charging of the battery (1), all charging current flows through one of the coils (11a) of the electric motor (11).

4. Charging device (100; 300; 500; 600) according to one of the preceding claims, wherein the at least three coils (11a; 11b, 11c) of the electric motor (11) are connected to each other in a star configuration and only connections to the at least three coils (11a; 11b, 11c) of the electric motor (11) exist from the neutral point.

5. Charging device (100; 400) according to Claim 1, wherein the electric motor comprises at least three coils (14a, 14b, 14c) which are connected to each other in a delta configuration and wherein the switch (19') ensures that during charging of the battery (1), half of the respective charging current flows on average over time through one of the coils (11a) of the electric motor (11).

6. Method for providing a charging device (100; 300; 400; 500; 600) for a battery (1) of a battery-operated electric drive, having the steps of:
- providing a step-down converter (15) which is a single-phase or multiphase rectifier that is connectable to an AC network and is able to provide a rectified current of equal or lower voltage at its outputs;
- providing an intermediate circuit (11; 14) which is connectable to the outputs of the step-down converter (15) and has coils (11a; 11b, 11c; 14a, 14b, 14c) for smoothing the rectified current;
- providing a step-up converter (12) which is able to convert the smoothed current of the intermediate circuit (11; 14) into a current having equal or higher voltage and is connected to the battery (1),
- wherein the electric motor of the electric drive is used to provide the intermediate circuit (11; 14) and wherein the drive converter of the electric drive is used to provide the step-up converter (12); and **characterized in that**
- during charging of the battery (1), a first connection of a coil (11a; 14a) of an electric motor (11; 14) is electrically connected to the step-down converter (15) wherein, that during the operation of the electric motor, a switch (19; 19') connects the same connection of the coil (11a; 14a) electrically to the step-up converter (12) .

7. Method according to Claim 6, wherein during charging of the battery (1), all charging current flows through one of the coils (11a) of the electric motor (11).

8. Method according to either of Claims 6 and 7, wherein the at least three coils or inductors (11a; 11b, 11c) of the electric motor (11) are connected to each other in a star configuration and only connections to the at least three coils (11a; 11b, 11c) of the electric motor (11) exist from the neutral point.

9. Use of a drive converter (12) and an electric motor (11; 14) of an electric drive in a charging device (100; 300; 400; 500; 600) for charging the battery (1) of the electric drive, wherein the drive converter (12) is used as a step-up converter and the electric motor (11; 14) is used as an intermediate circuit;
wherein during charging of the battery (1), a first connection of a coil (11a; 14a) of the electric motor (11; 14) is electrically connected to the step-down converter (15) which is a single-phase or multiphase rectifier; and wherein a switch (19; 19') is suitable for electrically connecting the same connection of the coil (11a; 14a) to the step-up converter (12),
- wherein the step-down converter (15) is connectable to a one- or three-phase AC network and is designed to provide a rectified current at its outputs;
- the intermediate circuit (11; 14) is electrically connectable to at least one output of the step-down converter (15) and has at least one inductor for smoothing the current; and
- the step-up converter (12) is designed to be electrically connected to the step-down converter (15) at at least one input via the intermediate circuit (11; 14) and is electrically connected to the battery (1) at its outputs and is suitable for converting the voltage provided by the step-down converter (15) and/or the current intermediate circuit (11; 14) into an equally high or higher voltage for charging the battery (1).

## Revendications

1. Dispositif de charge (100 ; 300 ; 400 ; 500 ; 600) pour charger une batterie (1) d'un entraînement électrique fonctionnant sur batterie, comprenant :
- un abaisseur de tension (15), qui est un redresseur monophasé ou polyphasé pouvant être relié à un réseau alternatif monophasé ou triphasé et qui est conçu pour fournir à ses sorties un courant redressé ;
- un circuit intermédiaire (11 ; 14), qui peut être relié électriquement à au moins une sortie de l'abaisseur de tension (15) et qui comporte au moins une inductance destinée à lisser le courant ;
- un élévateur de tension (12), qui est conçu pour être relié électriquement à l'abaisseur de tension (15) par l'intermédiaire du circuit intermédiaire (11 ; 14) à au moins une entrée, qui est relié électriquement par ses sorties à la batterie (1) et qui est apte à convertir la tension fournie par l'abaisseur de tension (15) et/ou le circuit intermédiaire (11 ; 14) en une tension égale ou supérieure pour charger la batterie (1),
- dans lequel l'élévateur de tension (12) est formé par le convertisseur d'entraînement de l'entraînement électrique et le circuit intermédiaire (11 ; 14) est formé par un moteur électrique de l'entraînement électrique ;
**caractérisé en ce que**,
lors de la charge de la batterie (1), une première borne de la bobine (11a ; 14a) du moteur électrique (11 ; 14) est reliée électriquement à l'abaisseur de tension (15) et **en ce que**, lors du fonctionnement du moteur électrique, un commutateur (19 ; 19') relie électriquement la même borne de la bobine (11a ; 14a) à l'élévateur de tension (12).

2. Dispositif de charge (100 ; 300 ; 400 ; 500 ; 600) selon la revendication 1, dans lequel le moteur électrique comprend au moins trois bobines (11a ; 11b, 11c ; 14a, 14b, 14c) qui sont reliées entre elles en étoile ou en triangle.

3. Dispositif de charge (100 ; 300 ; 500 ; 600) selon la revendication 2, dans lequel le commutateur (19 ; 19') fait en sorte que, lors de la charge de la batterie (1), la totalité du courant de charge passe respectivement à travers l'une des bobines (11a) du moteur électrique (11).

4. Dispositif de charge (100 ; 300 ; 500 ; 600) selon l'une des revendications précédentes, dans lequel lesdites au moins trois bobines (11a ; 11b, 11c) du moteur électrique (11) sont reliées entre elles en étoile et, à partir du point d'étoile, ne sont constituées que des bornes reliées auxdites au moins trois bobines (11a ; 11b, 11c) du moteur électrique (11).

5. Dispositif de charge (100 ; 400) selon la revendication 1, dans lequel le moteur électrique comprend au moins trois bobines (14a, 14b, 14c) reliées entre elles en triangle et dans lequel le commutateur (19') fait en sorte que, lors de la charge de la batterie (1), la moitié du courant de charge passe en moyenne dans le temps à travers l'une des bobines (11a) du moteur électrique (11).

6. Procédé de fourniture d'un dispositif de charge (100 ; 300 ; 400 ; 500 ; 600) destiné à une batterie (1) d'un entraînement électrique fonctionnant sur batterie, comprenant les étapes consistant à :
- fournir un abaisseur de tension (15), qui est un redresseur monophasé ou polyphasé pouvant être relié à un réseau alternatif et qui est capable de fournir à ses sorties un courant redressé ayant une tension égale ou inférieure ;
- fournir un circuit intermédiaire (11 ; 14), qui peut être relié aux sorties de l'abaisseur de tension (15) et qui comporte des bobines (11a ; 11b, 11c ; 14a, 14b, 14c) destinées à lisser le courant redressé ;
- fournir un élévateur de tension (12), qui est capable de convertir le courant lissé du circuit intermédiaire (11 ; 14) en un courant ayant une tension égale ou supérieure et qui est relié à la batterie (1),
- dans lequel le moteur électrique de l'entraînement électrique est utilisé pour fournir le circuit intermédiaire (11 ; 14) et dans lequel le convertisseur d'entraînement de l'entraînement électrique est utilisé pour fournir l'élévateur de tension (12) ; et **caractérisé en ce que**,
- lors de la charge de la batterie (1), une première borne d'une bobine (11a ; 14a) d'un moteur électrique (11 ; 14) est reliée électriquement à l'abaisseur de tension (15), dans lequel que, lors du fonctionnement du moteur électrique, un commutateur (19 ; 19') relie électriquement la même borne de la bobine (11a ; 14a) à l'élévateur de tension (12).

7. Procédé selon la revendication 6, dans lequel, pendant la charge de la batterie (1), la totalité du courant de charge passe respectivement à travers l'une des bobines (11a) du moteur électrique (11).

8. Procédé selon l'une des revendications 6 ou 7, dans lequel lesdites au moins trois bobines ou inductances (11a ; 11b, 11c) du moteur électrique (11) sont reliées entre elles en étoile et, à partir du point d'étoiles, ne sont constituées que des bornes qui sont reliées auxdites au moins trois bobines (11a ; 11b, 11c) du moteur électrique (11).

9. Utilisation d'un convertisseur d'entraînement (12) et d'un moteur électrique (11 ; 14) d'un entraînement électrique dans un dispositif de charge (100 ; 300 ; 400 ; 500 ; 600) pour charger la batterie (1) de l'entraînement électrique, dans lequel le convertisseur d'entraînement (12) joue le rôle d'élévateur de tension et le moteur électrique (11 ; 14) joue le rôle de circuit intermédiaire ;
dans lequel, lors de la charge de la batterie (1), une première borne d'une bobine (11a ; 14a) du moteur électrique (11 ; 14) est reliée électriquement à l'abaisseur de tension (15), qui est un redresseur monophasé ou polyphasé ; et
dans lequel un commutateur (19 ; 19') est apte à relier électriquement la même borne de la bobine (11a ; 14a) à l'élévateur de tension (12),
- dans lequel l'abaisseur de tension (15) peut être relié à un réseau à courant alternatif monophasé ou triphasé et est conçu pour fournir à ses sorties un courant redressé ;
- le circuit intermédiaire (11 ; 14) peut être relié électriquement à au moins une sortie de l'abaisseur de tension (15) et comporte au moins une inductance destinée à lisser le courant ; et
- l'élévateur de tension (12) est conçu pour être relié électriquement par au moins une entrée par l'intermédiaire du circuit intermédiaire (11 ; 14) à l'élévateur de tension (15) et est relié électriquement par ses sorties à la batterie (1) et est apte à convertir la tension fournie par l'abaisseur de tension (15) et/ou le circuit de courant intermédiaire (11 ; 14) en une tension égale ou supérieure pour charger la batterie (1).
